# EUROPEAN PATENT APPLICATION

(11) **EP 4 084 274 A1**
(43) Date of publication of application: **02.11.2022**
(21) Application number: 20904327.2
(22) Date of filing: 25.12.2020
(51) Int. Cl.: H02J 13/00, G06Q 50/06, H02J 7/00, H02J 7/35, B60L 50/60, H02J 3/38, B60L 53/51, B60L 53/65, B60L 53/66, B60L 53/68

(54) **ELECTRICAL POWER MANAGEMENT SYSTEM AND ELECTRICAL POWER MANAGEMENT METHOD**

(30) Priority: 27.12.2019 JP 2019238536
(71) Applicant: Kyocera Corporation, Kyoto-shi, Kyoto 6128501 (JP)
(72) Inventor: SUZUKI, Issei, Kyoto-shi, Kyoto 612-8501 (JP); SASAKI, Toshiaki, Kyoto-shi, Kyoto 612-8501 (JP)
(74) Representative: TBK
(86) International application number: PCT/JP2020/049003
(87) International publication number: WO 2021/132672

(57) **Abstract**

A power management system for managing a predetermined facility including a power generator includes a receiver for receiving a message including a first information element for identifying a right holder for a moving body and a second information element for identifying a right holder for the power generator when charging of a power storage device provided in the moving body is performed by power generated by the power generator, and a controller for identifying an attribution subject of an environmental value generated by the charging of the power storage device based on the first information element and the second information element.

## Description

### Technical Field

The present disclosure relates to a power management system and a power management method.

### Background Art

In recent years, power generators that utilize natural energy such as sunlight, wind power, hydropower, and geothermal heat have attracted attention. Furthermore, there is known a mechanism (so-called self-consumption) in which power output from a power generator provided in a predetermined facility is consumed by load devices provided in the predetermined facility (for example, Patent Document 1).

Meanwhile, a mechanism has also been proposed in which an environmental value is imparted by the self-consumption described above. Furthermore, as one of the above-described load devices, a power storage device provided in a moving body such as an electric vehicle can be considered.

However, the cases considered may include a case where charging of the power storage device provided in the moving body attributed to the predetermined facility is performed by power output from a power generator provided in a visit facility other than the predetermined facility, and a case where the charging of a power storage device provided in a moving body other than the moving body attributed to the predetermined facility is performed by power output from the power generator provided in the predetermined facility.

In these cases, the attribution of the environmental value generated by the self-consumption associated with the charging of the power storage device provided in the moving body is unclear.

### Citation List

### Patent Literature

Patent Document 1: JP 2017-191523 A

### Summary

A power management system according to the present disclosure is a system for managing a predetermined facility including a power generator, and includes a receiver configured to receive a message including a first information element for identifying a right holder for a moving body and a second information element for identifying a right holder for the power generator in a case where charging of a power storage device provided in the moving body is performed by power generated by the power generator, and a controller configured to identify an attribution subject of an environmental value generated by the charging of the power storage device based on the first information element and the second information element.

A power management method according to the present disclosure is a method for managing a predetermined facility including a power generator, and includes receiving a message including a first information element for identifying a right holder for a moving body and a second information element for identifying a right holder for the power generator in a case where charging of a power storage device provided in the moving body is performed by power generated by the power generator, and identifying an attribution subject of an environmental value generated by the charging of the power storage device based on the first information element and the second information element.

### Brief Description of Drawings

FIG. 1 is a diagram illustrating a power management system 100 according to an embodiment.
FIG. 2 is a diagram illustrating a home facility 10 according to the embodiment.
FIG. 3 is a diagram illustrating a visit facility 20A according to the embodiment.
FIG. 4 is a diagram illustrating a management device 30 according to the embodiment.
FIG. 5 is a diagram illustrating a message according to the embodiment.
FIG. 6 is a diagram illustrating an example of a correspondence relationship stored in a storage 32 according to the embodiment.
FIG. 7 is a diagram illustrating an example of the correspondence relationship stored in the storage 32 according to the embodiment.
FIG. 8 is a diagram for explaining a self-consumption power according to the embodiment.
FIG. 9 is a diagram for explaining the self-consumption power according to the embodiment.
FIG. 10 is a diagram illustrating a power management method according to the embodiment.
FIG. 11 is a diagram illustrating a power management method according to a second embodiment.
FIG. 12 is a diagram illustrating a power management method according to a third embodiment.
FIG. 13 is a diagram illustrating a home facility 10 according to a fourth embodiment.
FIG. 14 is a diagram illustrating a visit facility 20A according to a sixth embodiment.
FIG. 15 is a diagram illustrating a detector 27A according to the sixth embodiment.

### Description of Embodiments

Embodiments will be described below with reference to the accompanying drawings. Note that in the following description of the drawings, the same or similar components will be denoted by the same or similar reference signs. However, the drawings are schematic.

### Embodiment

### Power Management System

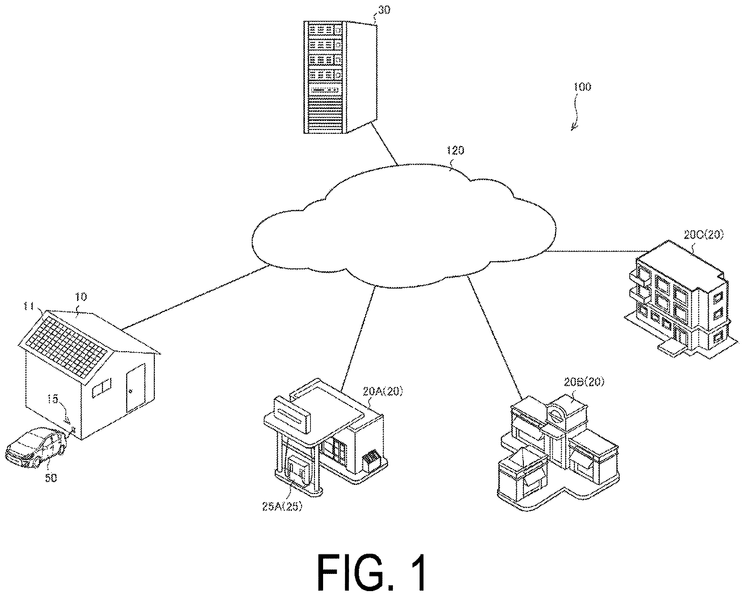

A power management system 100 according to embodiments will be described below. As illustrated in FIG. 1, the power management system 100 includes a home facility 10, visit facilities 20, a management device 30, and an electric vehicle (hereinafter, EV) 50. The home facility 10 and the management device 30 are connected to each other via a network 120. The visit facilities 20 and the management device 30 may be connected to each other via the network 120. The network 120 may include the Internet, or may include a mobile communication network. The network 120 may include a Virtual Private Network (VPN).

The home facility 10 is an example of a predetermined facility including a power generator (solar cell device 11 described later). The home facility 10 is a facility attributed to a right holder for the EV 50. In other words, a right holder for the home facility 10 is the same as the right holder for the EV 50, and the EV 50 is attributed to the home facility 10. The right holder for the home facility 10 may be an owner of the home facility 10 in a case where the home facility 10 is a purchased property, or may be a borrower, a lender or an administrator of the home facility 10 in a case where the home facility 10 is a rental property. The right holder for the EV 50 may be an owner of the EV 50 in a case where the EV 50 is a purchased property, or may be a borrower, a lender or an administrator of the EV 50 in a case where the EV 50 is a rental property. The case where the EV 50 is the rental property may include a case (car sharing) in which the EV 50 is shared by two or more users. The EV 50 is an example of a moving body that may move from the home facility 10.

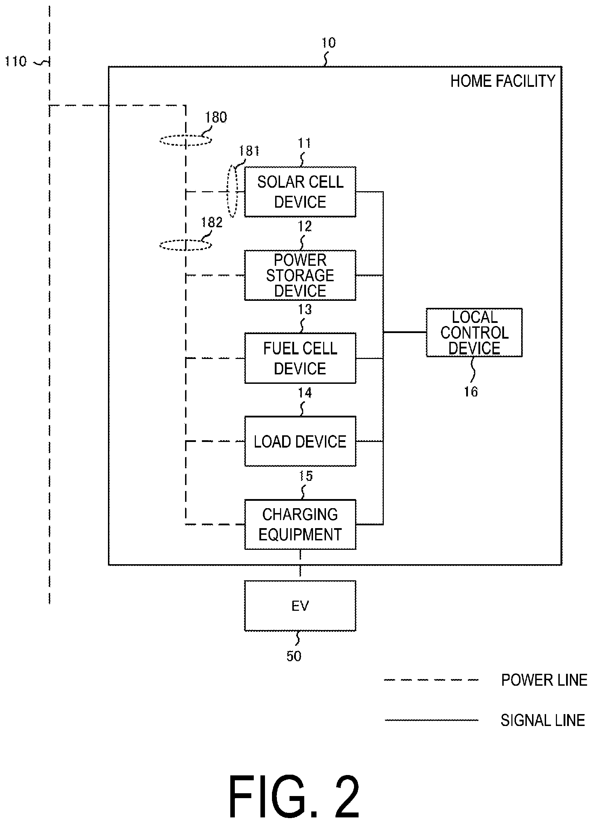

Here, the home facility 10 includes a charging equipment 15 that charges a power storage device provided in the EV 50. Hereinafter, the power storage device provided in the EV 50 is simply referred to as the EV 50. The details of the home facility 10 will be described later (see FIG. 2).

The visit facility 20 is an example of the predetermined facility including the power generator (for example, a solar cell device 21A described later). The visit facility 20 is a facility not attributed to the right holder for the EV 50. In other words, a right holder for the visit facility 20 is different from the right holder for the EV 50, and for the visit facility 20, the EV 50 is an example of a third party moving body that is not attributed to the visit facility 20. The right holder for the visit facility 20 may be an owner of the visit facility 20 in a case where the visit facility 20 is a purchased property, or may be a borrower, a lender or an administrator of the visit facility 20 in a case where the visit facility 20 is a rental property.

FIG. 1 illustrates an example of a visit facility 20A, a visit facility 20B, and a visit facility 20C, as the visit facilities 20. The visit facility 20A may include a charging station that charges the EV 50. The visit facility 20B may include a commercial facility such as a shopping mall. The visit facility 20C may include a residence of a friend of the right holder for the EV 50. The visit facility 20C may include an office facility at which the right holder for the EV 50 works.

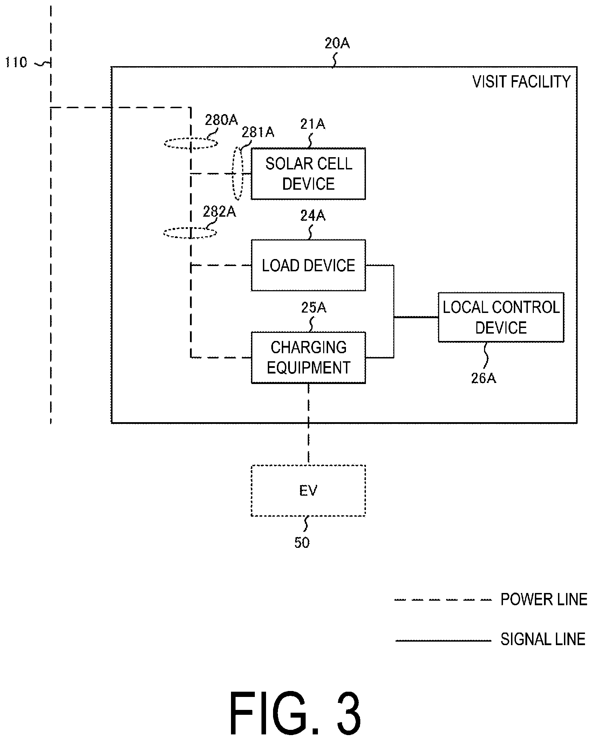

For example, the visit facility 20 may include the visit facility 20A including a charging equipment 25A that charges the EV 50. The visit facility 20 may include the visit facility 20B and the visit facility 20C that do not include the charging equipment (the charging equipment 15A or the charging equipment 25A, the same applies hereinafter) that charges the EV 50. However, the visit facility 20B and the visit facility 20C may include the charging equipment that charges the EV 50. Details of the visit facility 20A, which is an example of the visit facility 20, will be described later (see FIG. 3).

The management device 30 is a device for identifying an attribution subject of the environmental value generated by the charging of the EV 50. The management device 30 is a device attributed to a management entity for managing two or more facilities including the home facility 10 and the visit facility 20. The management device 30 may be a device managed by a business operator, such as a power generation operator, a power transmission/distribution operator, a retailer, or a resource aggregator. The resource aggregator is an electric power provider that provides the reverse power flow to the power generation operator, the power transmission/distribution operator, the retailer, or the like in a virtual power plant (VPP). The resource aggregator may be an electric power provider that produces a reduced power of the power flow (consumed power) of the facility managed by the resource aggregator. The business operator managing the management device 30 may be a purchase entity of the reverse power flow.

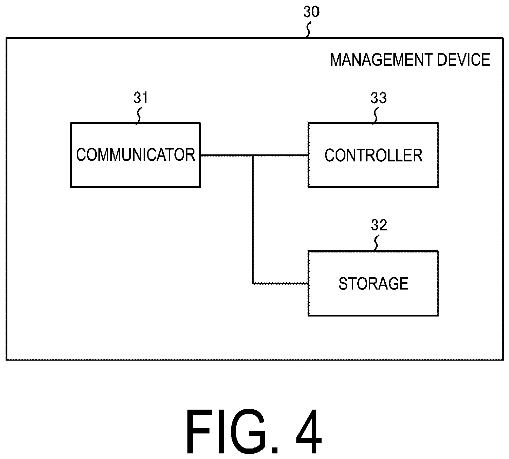

The management device 30 may transmit, to the facility, a control message instructing control of a distributed power supply (for example, a solar cell device, a power storage device, or a fuel cell device) provided in the facility. For example, the management device 30 may transmit a flow control message (for example, a Demand Response (DR)) for requesting control of the power flow and may transmit a reverse flow control message for requesting control of the reverse power flow. Furthermore, the management device 30 may transmit a power supply control message that controls an operating state of the distributed power supply. A degree of control of the power flow or the reverse power flow may be expressed as an absolute value (for example, XX kW), or may be expressed as a relative value (for example, XX %). Alternatively, the degree of control of the power flow or the reverse power flow may be expressed by using two or more levels. The degree of control of the power flow or the reverse power flow may be expressed by a power charge (real time pricing (RTP)) defined by the current power supply and demand balance, and may be expressed by a power charge (time of use (TOU)) defined by the past power supply and demand balance. Details of the management device 30 will be described later (see FIG. 4).

### Home Facility

The home facility 10 according to the embodiments will be described below. As illustrated in FIG. 2, the home facility 10 includes the solar cell device 11, a power storage device 12, a fuel cell device 13, a load device 14, the charging equipment 15, and a local control device 16. Furthermore, the home facility 10 includes a power meter 180, a power meter 181, and a power meter 182.

The solar cell device 11 is the distributed power supply that generates power according to sunlight or other light. The solar cell device 11 may be an example of the distributed power supply to which the feed-in tariff (FIT) is applied. For example, the solar cell device 11 includes a Power Conditioning System (PCS) and a solar panel. The solar cell device 11 may be an example of a control target equipment controllable by the management entity (management device 30).

Here, the power output from the solar cell device 11 may vary depending on an amount of received light such as sunlight. Thus, when considering power generation efficiency of the solar cell device 11, the power output from the solar cell device 11 is variable power that can vary according to the amount of received light of the solar panel.

The power storage device 12 is the distributed power supply that charges the power and discharges the power. The power storage device 12 may be an example of the distributed power supply to which the feed-in tariff is not applied. For example, the power storage device 12 includes the PCS and a power storage cell. The power storage device 12 may be an example of the control target equipment controllable by the management entity (management device 30).

The fuel cell device 13 is the distributed power supply that generates power using a fuel. The fuel cell device 13 may be an example of the distributed power supply to which the feed-in tariff is not applied. For example, the fuel cell device 13 includes the PCS and the fuel cell. The fuel cell device 13 may be an example of the control target equipment controllable by the management entity (management device 30).

For example, the fuel cell device 13 may be a Solid Oxide Fuel cell (SOFC), a Polymer Electrolyte Fuel Cell (PEFC), a Phosphoric Acid Fuel Cell (PAFC), and a Molten Carbonate Fuel Cell (MCFC).

The load device 14 is a device that consumes power. For example, the load device 14 is an air conditioning device, an illumination device, an audio visual (AV) device, or the like. The load device 14 may be an example of a non-control target equipment that is not controlled by the power management entity (management device 30).

The charging equipment 15 is a facility that charges the EV 50. The charging equipment 15 may include an adapter configured to be attachable to a household outlet. The charging equipment 15 may include a power meter that measures at least one of the charged power of the EV 50 and the discharged power of the EV 50. The charging equipment 15 may transmit, to the local control device 16, power information indicating at least one of the charged power of the EV 50 and the discharged power of the EV 50.

The local control device 16 is a device (EMS: Energy Management System) that manages power of the home facility 10. The local control device 16 may control an operating state of the solar cell device 11, may control an operating state of the power storage device 12 provided in the home facility 10, and may control an operating state of the fuel cell device 13 provided in the home facility 10.

The power meter 180 is an example of a base power meter that measures the power flow from a power grid 110 to the home facility 10 and the reverse power flow from the home facility 10 to the power grid 110. For example, the power meter 180 is a smart meter that is attributed to a power company.

The power meter 181 is a power meter that measures the output power of the solar cell device 11. The power meter 181 may be provided in the solar cell device 11.

The power meter 182 is a power meter that measures power of devices provided downstream of the solar cell device 11 in the home facility 10. Here, the downstream is a term indicating a position away from the power grid 110. In a case where the reverse power flow of the output power of the power storage device 12 and the fuel cell device 13 is not allowed, the power meter 182 may be used as a power meter for preventing the reverse power flow. In such a case, the power meter 182 measures power consumption measured as a set of the devices provided downstream of the solar cell device 11. In a case where the power storage device 12 performs discharging operation, the power consumption measured by the power meter 182 is a value obtained by subtracting the sum of the output power of the discharged power of the power storage device 12 and the output power of the fuel cell device 13 from the sum of the power consumption of the load device 14 and the charged power of the EV 50. In a case where the power storage device 12 performs charging operation, the power consumption measured by the power meter 182 is a value obtained by subtracting the sum of the output power of the fuel cell device 13 from the sum of the charged power of the power storage device 12, the power consumption of the load device 14, and the charged power of the EV 50.

In the example illustrated in FIG. 2, the power meter 180 is a base power meter attributed to the power company, and may be a power meter having a higher reliability than that of the power meter 181 and the power meter 182. The power meter 182 is a power meter authenticated by a third party organization, and may be a power meter having a higher reliability than that of the power meter 181. The reliability is reliability when determining a price of the power and the environmental value, and need not be reliability of measurement accuracy.

Under such assumptions, the solar cell device 11 is an example of a power generator that generates the environmental value when the output power of the solar cell device 11 is consumed in the home facility 10 (so-called self-consumption). For example, when the reduction in an amount of carbon dioxide emission produces the environmental value, an action (self-consumption) of consuming generated power of the solar cell device 11 or the like that does not emit carbon dioxide in the home facility 10 instead of generated power of a power plant or the like that emits carbon dioxide generates the environmental value in a sense of contributing to the reduction in the amount of carbon dioxide emission. The environmental value may be a value certified by the third party organization. The environmental value may be certified by a green power certificate, a J-credit, or the like. In the embodiment, attention is focused on the attribution of the environmental value generated by the charging of the EV 50 included in the self-consumption.

The local control device 16 described above may be able to identify the power flow from the power grid 110 to the home facility 10 and the reverse power flow from the home facility 10 to the power grid 110 based on the power information received from the power meter 180. The local control device 16 may identify the output power of the solar cell device 11 based on the power information received from the power meter 181. The local control device 16 may identify the power consumption measured as the set of the devices provided downstream of the solar cell device 11 in the home facility 10 based on the power information received from the power meter 182.

Note that, the local control device 16 may be able to identify the output power of the solar cell device 11 based on the power information received from the solar cell device 11. The local control device 16 may be able to identify the charged power or the discharged power of the power storage device 12 based on the power information received from the power storage device 12. The local control device 16 may be able to identify the output power of the fuel cell device 13 based on the power information received from the fuel cell device 13. The local control device 16 may be able to identify the power consumption of the load device 14 based on the power information received from the load device 14. The local control device 16 may be able to identify the charged power or the discharged power of the EV 50 based on the power information received from the charging equipment 15.

In FIG. 2, the case is illustrated in which the power storage device 12 and the fuel cell device 13 are provided in the home facility 10, but at least one of the power storage device 12 and the fuel cell device 13 need not be provided in the home facility 10.

### Visit Facility

The visit facility 20 according to the embodiment will be described below. Here, the visit facility 20A will be described as an example of the visit facility 20. The visit facility 20B and the visit facility 20C may also have the same configuration as the visit facility 20A. As illustrated in FIG. 3, the visit facility 20A includes a solar cell device 21A, a load device 24A, a charging equipment 25A, and a local control device 26A. Furthermore, the visit facility 20A includes a power meter 280A, a power meter 281A, and a power meter 282A.

Similar to the solar cell device 11, the solar cell device 21A is a distributed power supply that generates power according to sunlight or other light. Similar to the load device 14, the load device 24A is a device that consumes power. Similar to the charging equipment 15, the charging equipment 25A is an equipment that charges the EV 50. Similar to the local control device 16, the local control device 26A is a device that manages the power of the visit facility 20A.

For example, similar to the charging equipment 15, the charging equipment 25A may include a power meter that measures at least one of the charged power of the EV 50 and the discharged power of the EV 50. The charging equipment 25A may transmit, to the local control device 26A, power information indicating at least one of the charged power of the EV 50 and the discharged power of the EV 50.

Similar to the power meter 180,the power meter 280A is an example of the base power meter that measures the power flow from the power grid 110 to the visit facility 20A and the reverse power flow from the visit facility 20A to the power grid 110. Similar to the power meter 181, the power meter 281A is a power meter that measures the output power of the solar cell device 21A. Similar to the power meter 182, the power meter 282A is a power meter that measures power of the devices provided downstream of the solar cell device 21A in the visit facility 20.

Under such assumptions, the solar cell device 21A is an example of a power generator that generates the environmental value when the output power of the solar cell device 21A is consumed in the visit facility 20A (so-called self-consumption). The environmental value may be a value for the concern for the global environment, such as a price of carbon dioxide that affects global warming (Carbon Printing). For example, the environmental value may be a value certified by the third party organization. The environmental value may be certified by the green power certificate, the J-credit, or the like. In the embodiment, attention is focused on the attribution of the environmental value generated by the charging of the EV 50 included in the self-consumption.

The local control device 26A described above may be able to identify the power flow from the power grid 110 to the visit facility 20A and the reverse power flow from the visit facility 20A to the power grid 110 based on the power information received from the power meter 280A. The local control device 26A may identify the output power of the solar cell device 21A based on the power information received from the power meter 281A. The local control device 26A may identify the power consumption measured as the set of the devices provided downstream of the solar cell device 21A in the visit facility 20 based on the power information received from the power meter 282A.

Note that, the local control device 26A may be able to identify the output power of the solar cell device 21A based on the power information received from the solar cell device 21A. The local control device 26A may be able to identify the power consumption of the load device 24A based on the power information received from the load device 24A. The local control device 26A may be able to identify the charged power or the discharged power of the EV 50 based on the power information received from the charging equipment 25A.

FIG. 3 illustrates the case in which the power storage device and the fuel cell device are not provided in the visit facility 20A. At least one of the power storage device and the fuel cell device may be provided in the visit facility 20A.

### Management Device

The management device 30 according to the embodiment will be described below. As illustrated in FIG. 4, the management device 30 includes a communicator 31, a storage 32, and a controller 33.

The communicator 31 includes a communication module. The communication module may be a wireless communication module compliant with standards such as IEEE 802.11a/b/g/n, ZigBee, Wi-SUN, and LTE, or may be a wired communication module compliant with standards such as IEEE 802.3.

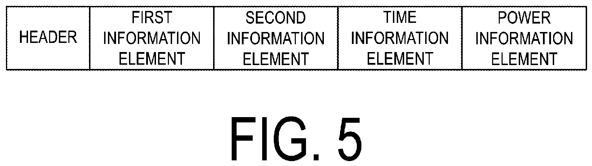

The communicator 31 constitutes a receiver for receiving at least a message including at least a first information element and a second information element when the charging of the EV 50 is performed by the power generated by the power generator (the solar cell device 11 or the solar cell device 21A). The communicator 31 may receive a message from the predetermined facility. The communicator 31 may receive the message from the EV 50 when the EV 50 is capable of communicating with the management device 30. The first information element is an information element for identifying the right holder for the EV 50. The second information element is an information element for identifying the right holder for the power generator. For example, the message may be received when the charging of the EV 50 has been completed. The message may be generated according to a format illustrated in FIG. 5 described later.

The right holder for the EV 50 may be the owner of the EV 50, or may be the borrower, the lender or the administrator of the EV 50.

The right holder for the EV 50 may be indirectly identified by an information element (for example, a vehicle ID) for identifying the EV 50. In such a case, the first information element may include the information element for identifying the EV 50.

The right holder for the power generator may be directly or indirectly identified as the attribution subject of the environmental value generated by the charging from the power generator to the EV 50. Specifically, the right holder for the power generator may be a right holder for the predetermined facility (the home facility 10 or the visit facility 20) provided with the power generator. As described above, the right holder for the predetermined facility may be the owner of the predetermined facility, or may be the borrower, the lender or the administrator of the predetermined facility. Alternatively, the right holder for the power generator may be different from the right holder for the predetermined facility. For example, when the power generator is owned by a third party different from the right holder for the predetermined facility, the right holder for the power generator may be the third party that owns the power generator.

The right holder for the power generator may be indirectly identified by an information element (for example, facility ID) for identifying the predetermined facility (the home facility 10 or the visit facility 20A). In such a case, the second information element may include an information element for identifying the predetermined facility. The right holder for the power generator may be indirectly identified by an information element for identifying the charging equipment (the charging equipment 15 or charging equipment 25A) that executes the charging from the power generator to the EV 50. In such a case, the second information element may include an information element for identifying the charging equipment. The right holder for the power generator may be indirectly identified by an information element (for example, power generator ID) for identifying the power generator (the solar cell device 11 or the solar cell device 21A). In such a case, the second information element may include an information element for identifying the power generator.

For example, as illustrated in FIG. 5, the message described above may include a header, a first information element, a second information element, a time information element, and a power information element.

The header includes a source of the message and a destination of the message. The first information element is an information element for identifying the right holder for the EV 50. The second information element is an information element for identifying the right holder for the power generator. The time information element is an information element for identifying a time zone in which the charging from the power generator to the EV 50 is performed. The power information element is an information element for identifying the self-consumption power in the time zone in which the charging from the power generator to the EV 50 is performed. Alternatively, the power information element is an information element for identifying the charged power from the power generator to the EV 50. The power information element is an example of a third information element for identifying the self-consumption power of the predetermined facility.

FIG. 5 illustrates the case illustrated in which the time information element is included in the message. The time information element need not be included in the message when the time zone in which the charging from the power generator to the EV 50 is performed can be identified by another method. Similarly, FIG. 5 illustrates the case in which the power information element is included in the message. The power information element need not be included in the message when the charged power from the power generator to the EV 50 can be identified by another method.

The storage 32 includes a memory such as a non-volatile memory and/or a storage medium such as a hard disc drive (HDD), and stores various pieces of information.

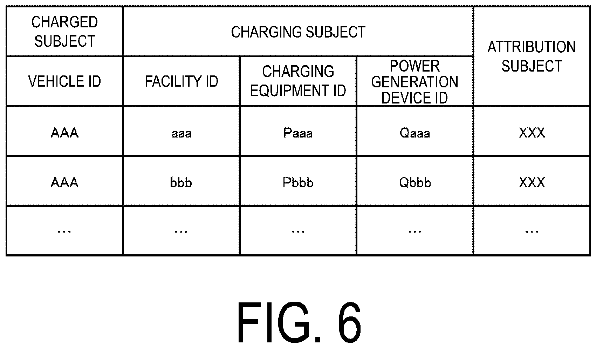

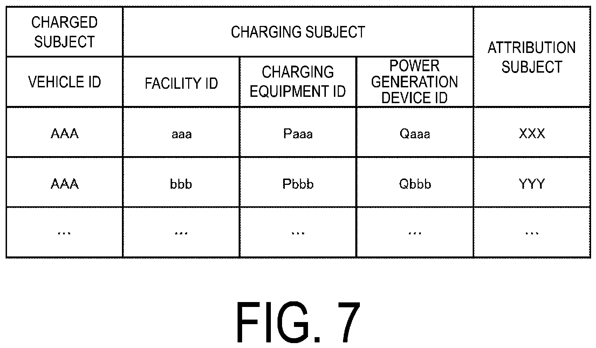

The storage 32 stores a correspondence relationship between at least one of the predetermined facility and the power generator and the EV 50 as a correspondence relationship for identifying the attribution subject of the environmental value. The storage 32 stores a correspondence relationship between the charging equipment and the EV 50 as the correspondence relationship for identifying the attribution subject of the environmental value. For example, the storage 32 stores a correspondence relationship illustrated in FIG. 6 or 7.

As illustrated in FIG. 6 or 7, the storage 32 stores the correspondence relationship among charged subjects, charging subjects, and attribution subj ects.

The charged subjects are subjects that are charged by the self-consumption power. In the embodiment, attention is focused on a case where the charged subject is the EV 50, and the charged subject may be identified by the first information element described above.

The charging subject is a subject performing charging by the self-consumption power. In the embodiment, the charging subject may include the predetermined facility, the power generator, or the charging equipment. When the right holder for the power generator is the information element for indirectly identifying the attribution subject, the charging subject may be considered as an information element identified by the second information element described above.

The attribution subject is an attribution subject of the environmental value generated by the charging from the power generator to the EV 50. When the right holder for the power generator is an information element for directly identifying the attribution subject, the attribution subject may be considered as an information element identified by the second information element described above.

For example, a case will be considered in which the vehicle ID of the EV 50 is "AAA", the facility ID of the home facility 10 is "aaa", and the facility ID of the visit facility 20A is "bbb". A charging equipment ID of the charging equipment 15 is "Paaa", and the power generator ID of the solar cell device 11 is "Qaaa". The charging equipment ID of the charging equipment 25A is "Pbbb", and the power generator ID of the solar cell device 21A is "Qbbb". Furthermore, it is assumed that the attribution subject of the environmental value generated by the charging of the EV 50 performed by the self-consumption power of the home facility 10 is "XXX". The "XXX" may be an owner, a borrower, a lender or an administrator of the home facility 10, or may be an owner, a borrower, a lender or an administrator of the solar cell device 11. The "XXX" may be an owner, a borrower, a lender or an administrator of the charging equipment 15. The "XXX" may be a management entity (management device 30) of the home facility 10.

In such a case, the attribution subject of the environmental value generated by the charging of the EV 50 performed by the self-consumption power of the visit facility 20A may be "XXX" as illustrated in FIG. 6, or may be "YYY", which is different from the "XXX", as illustrated in FIG. 7. The "YYY" may be an owner, a borrower, a lender or an administrator of the visit facility 20A, or may be an owner, a borrower, a lender or an administrator of the solar cell device 21A. The "YYY" may be the owner, the borrower, the lender or the administrator of the charging equipment 15.

Note that FIG. 6 may be considered to indicate a case of the same attribution subject when the EV 50 is utilized by one user, and may be considered to indicate a case of the same attribution subject when the EV 50 is utilized by two or more users. FIG. 7 may be considered to indicate a case of the different attribution subjects in the case where the EV 50 is utilized by two or more users, and may be considered to indicate an example of a case of the different attribution subjects in the case where the EV 50 is utilized by one user.

Here, a correspondence relationship between a combination of the charged subject and the charging subject and the attribution subject can be arbitrarily set from various factors such as a contract relationship. The correspondence relationship stored in the storage 32 may be predetermined.

The controller 33 may include at least one processor. The at least one processor may be configured of a single integrated circuit (IC) or a plurality of circuits (such as integrated circuits and/or discrete circuits) connected so as to be capable of communicating with each other.

The controller 33 identifies the attribution subject of the environmental value generated by the charging of the EV 50, based on the first information element and the second information element. When the second information element (the right holder for the power generator) is the information element for directly identifying the attribution subject, the controller 33 may identify the attribution subject without using the correspondence relationship stored in the storage 32, or may identify the attribution subject using the correspondence relationship stored in the storage 32. When the second information element (the right holder for the power generator) is the information element for indirectly identifying the attribution subject, the controller 33 may identify the attribution subject using the correspondence relationship stored in the storage 32.

Here, the controller 33 may identify the attribution subject of the environmental value based on whether the first information element and the second information element satisfy the correspondence relationship stored in the storage 32. Specifically, when a combination of the first information element and the second information element is stored in the storage 32, the controller 33 identifies the attribution subject according to the correspondence relationship stored in the storage 32. On the other hand, when the combination of the first information element and the second information element is not stored in the storage 32, the controller 33 determines that the attribution subject is unknown, and does not identify any attribution subject.

That is, even when the mobility of the EV 50 is considered, identification of an appropriate attribution subject can be realized by storing, in the storage 32 in advance, the correspondence relationship related to the charging of the EV 50 that is allowed as the self-consumption.

### Self-Consumption Power

The self-consumption power according to the embodiment will be described below. Here, the self-consumption power of the home facility 10 will be described as an example. A case will be illustrated in which a power generator that generates the environmental value by the self-consumption is the solar cell device 11.

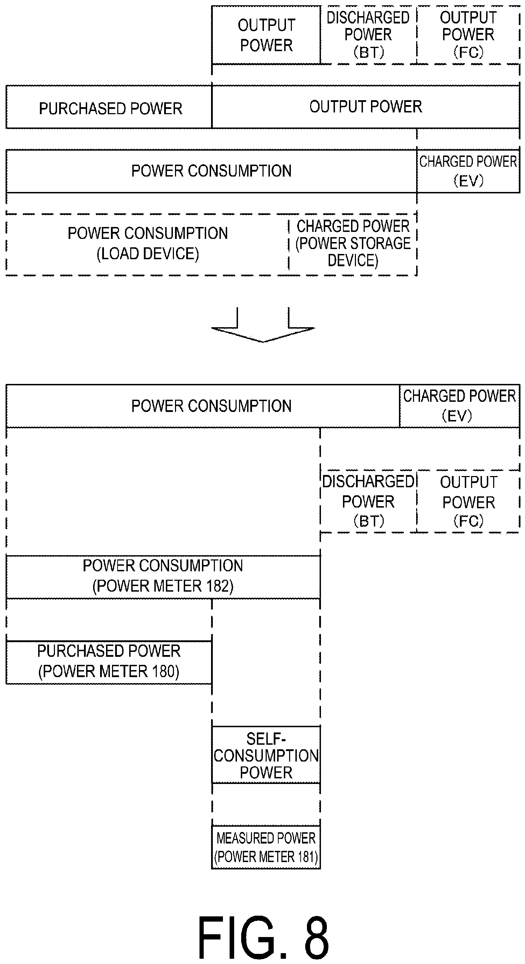

First, a case will be described using FIG. 8 in which power flow (purchased power) from the power grid 110 to the home facility 10 exists.

In such a case, the sum of the purchased power and the output power is equal to the sum of the power consumption of the load device 14 and the charged power of the EV 50. The purchased power is power measured by the power meter 180 described above. The output power includes at least the output power of the solar cell device 11. When the power storage device 12 performs discharging operation, the output power may include the discharged power of the power storage device 12. The output power may include the output power of the fuel cell device 13. On the other hand, the power consumption includes the power consumption of the load device 14. When the power storage device 12 performs charging operation, the power consumption may include the charged power of the power storage device 12.

In the case illustrated in FIG. 8, the self-consumption power may be calculated as a difference obtained by subtracting the purchased power measured by the power meter 180 from the power consumption measured by the power meter 182. When the power storage device 12 performs discharging operation, the power consumption measured by the power meter 182 is a value obtained by subtracting the sum of the output power of the discharged power of the power storage device 12 and the output power of the fuel cell device 13 from the sum of the power consumption of the load device 14 and the charged power of the EV 50. On the other hand, when the power storage device 12 performs charging operation, the power consumption measured by the power meter 182 is a value obtained by subtracting the sum of the output power of the fuel cell device 13 from the sum of the charged power of the power storage device 12, the power consumption of the load device 14, and the charged power of the EV 50.

Here, the self-consumption power calculated by the method described above (hereinafter, calculated self-consumption power) is theoretically the same as the power measured by the power meter 181 (output power of the solar cell device 11). Accordingly, the power measured by the power meter 181 may be treated as the self-consumption power. However, there is a possibility that the power measured by the power meter 181 does not match the calculated self-consumption power due to a measurement error or the like of the power meter 181. In such a case, a lower value of the power measured by the power meter 181 and the calculated self-consumption power may be treated as the self-consumption power.

Further, when the output power of the solar cell device 11, the charged or discharged power of the power storage device 12, the output power of the fuel cell device 13, the power consumption of the load device 14, and the charged power of the EV 50 can be all obtained, the self-consumption power may be calculated based on these parameters. Even in such a case, the lowest value of the self-consumption power calculated by various methods may be treated as the self-consumption power.

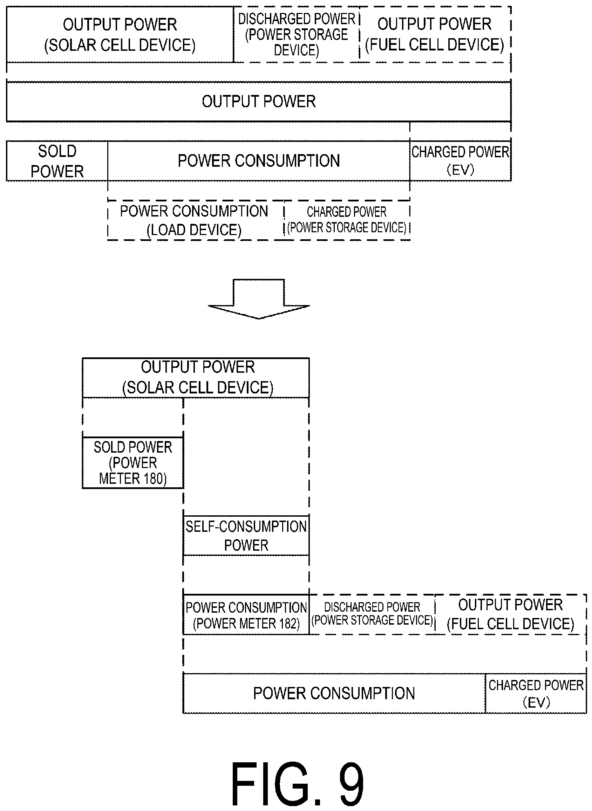

Second, a case will be described using FIG. 9 in which reverse power flow (sold power) from the home facility 10 to the power grid 110 exists.

In such a case, the sum of the output power is equal to the sum of the sold power, the power consumption, and the charged power of the EV 50. The sold power is the power measured by the power meter 180 described above. The output power includes at least the output power of the solar cell device 11. When the power storage device 12 performs discharging operation, the output power may include the discharged power of the power storage device 12. The output power may include the output power of the fuel cell device 13. On the other hand, the power consumption includes the power consumption of the load device 14. When the power storage device 12 performs charging operation, the power consumption may include the charged power of the power storage device 12.

In the case illustrated in FIG. 9, the self-consumption power may be calculated as a difference obtained by subtracting the sold power measured by the power meter 180 from the power (output power of the solar cell device 11) measured by the power meter 181.

Here, the self-consumption power calculated by the method described above (hereinafter, calculated self-consumption power) is theoretically the same as the self-consumption power measured by the power meter 182. Accordingly, the power consumption measured by the power meter 182 may be treated as the self-consumption power. However, there is a possibility the power consumption measured by the power meter 182 does not match the calculated self-consumption power due to a measurement error or the like of the power meter 182. In such a case, a lower value of the power consumption measured by the power meter 182 and the calculated self-consumption power may be treated as the self-consumption power.

Further, when the output power of the solar cell device 11, the charged or discharged power of the power storage device 12, the output power of the fuel cell device 13, the power consumption of the load device 14, and the charged power of the EV 50 can be all obtained, the self-consumption power may be calculated based on these parameters. Even in such a case, the lowest value of the self-consumption power calculated by various methods may be treated as the self-consumption power.

The self-consumption power determined by the method described above is used to certify the environmental value. The self-consumption power determined by the method described above may be used to certify the environmental value such as the green power certificate, the J-credit, or the like.

### Power Management Method

A power management method according to the embodiment will be described below. Here, the self-consumption power of the home facility 10 will be described as an example.

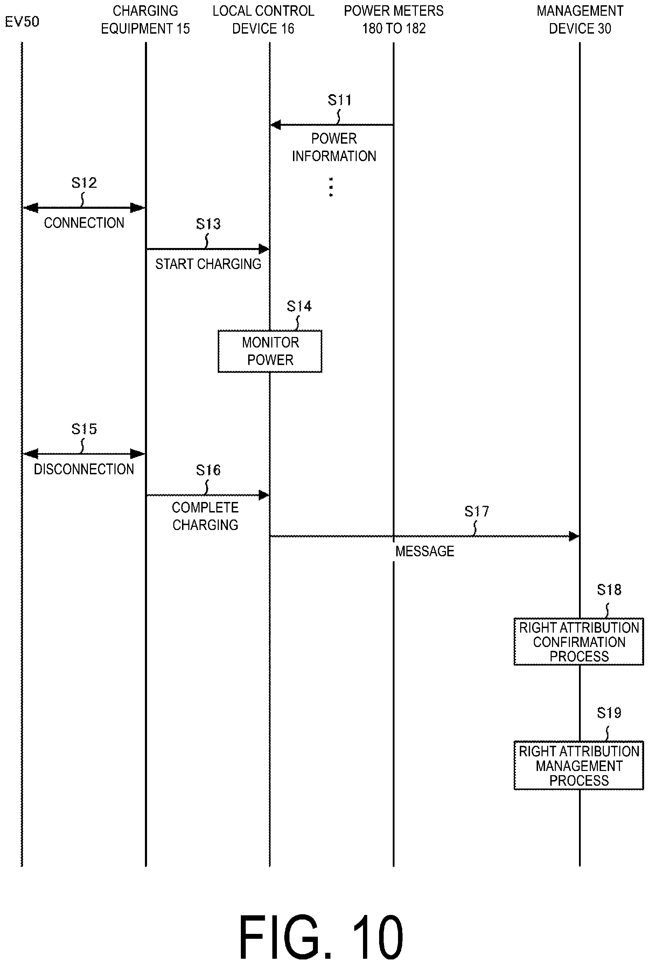

As illustrated in FIG. 10, in step S11, the local control device 16 receives power information from the power meter 180 to the power meter 182. The reception processing of the power information is repeated at a predetermined interval.

In step S12, the EV 50 is connected to the charging equipment 15. The EV 50 may notify the charging equipment 15 of the vehicle ID of the EV 50. The EV 50 may notify the local control device 16 of the vehicle ID of the EV 50. The charging equipment 15 may notify the EV 50 of the charging equipment ID of the charging equipment 15.

In step S13, the charging equipment 15 notifies the local control device 16 that charging of the EV 50 has been started. The charging equipment 15 may notify the local control device 16 of the charging start time of the EV 50. The charging equipment 15 may notify the local control device 16 of the vehicle ID of the EV 50.

In step S14, the local control device 16 monitors the power of the home facility 10. The local control device 16 monitors at least the power measured by the power meter 180 to the power meter 182.

In step S15, the connection between the EV 50 and the charging equipment 15 is disconnected.

In step S16, the charging equipment 15 notifies the local control device 16 that charging of the EV 50 has been completed. The charging equipment 15 may notify the local control device 16 of the charging end time of the EV 50.

In step S17, the local control device 16 transmits, to the management device 30, a message including at least the first information element and the second information element (see FIG. 5). As described above, the message may include the time information element. The message may include the power information element.

In step S18, the management device 30 confirms the attribution subject of the environmental value generated by the charging from the solar cell device 11 to the EV 50. Specifically, the management device 30 confirms whether the first information element and the second information element satisfy the correspondence relationship stored in the storage 32. Here, when a combination of the first information element and the second information element is stored in the storage 32, the management device 30 identifies the attribution subject according to the correspondence relationship stored in the storage 32. On the other hand, when the combination of the first information element and the second information element is not stored in the storage 32, the management device 30 determines that the attribution subject is unknown, and does not identify any attribution subject.

In step S19, when the attribution subject is identified, the management device 30 manages the identified attribution subject. The management device 30 manages the self-consumption power in the time zone in which the charging from the solar cell device 11 to the EV 50 is performed, along with the identified attribution subject. The management device 30 may manage the charged power from the solar cell device 11 to the EV 50 as the self-consumption power.

Although the self-power consumption of the home facility 10 is described in FIG. 10, the power management method illustrated in FIG. 10 can also be applied to the self-consumption power of the visit facility 20A. That is, the attribution subject of the environmental value generated by the charging from the solar cell device 21A to the EV 50 performed in the visit facility 20A may be identified based on the combination of the first information element for identifying the right holder for the EV 50 and the second information element for identifying the right holder for the solar cell device 21A. When the attribution subject is identified, the environmental value is imparted to the identified attribution subject.

### Actions and Effects

In the embodiment, the management device 30 receives the message including the first information element and the second information element, and identifies the attribution subject of the environmental value generated by the charging from the power generator to the EV 50, based on the first information element and the second information element. According to such a configuration, even when the mobility of the EV 50 is considered, the attribution subject can be identified.

In the embodiment, the management device 30 identifies the attribution subject of the environmental value generated by the charging from the power generator to the EV 50 based on whether the first information element and the second information element satisfy the correspondence relationship stored in the storage 32. Such a configuration can realize a method of determining the attribution subject with flexibility, and can appropriately identify the attribution subj ect.

### Second Embodiment

A second embodiment of the embodiment will be described below. In the following, differences from the embodiment will be mainly described.

In the embodiment, the case is described in which a transmission subject of the message including the first information element and the second information element is the local control device 16 of the home facility 10. In contrast, in the second embodiment, a case will be described in which the transmission subject of the message is the charging equipment 15.

### Power Management Method

A power management method according to the second embodiment will be described below. Here, the self-consumption power of the home facility 10 will be described as an example.

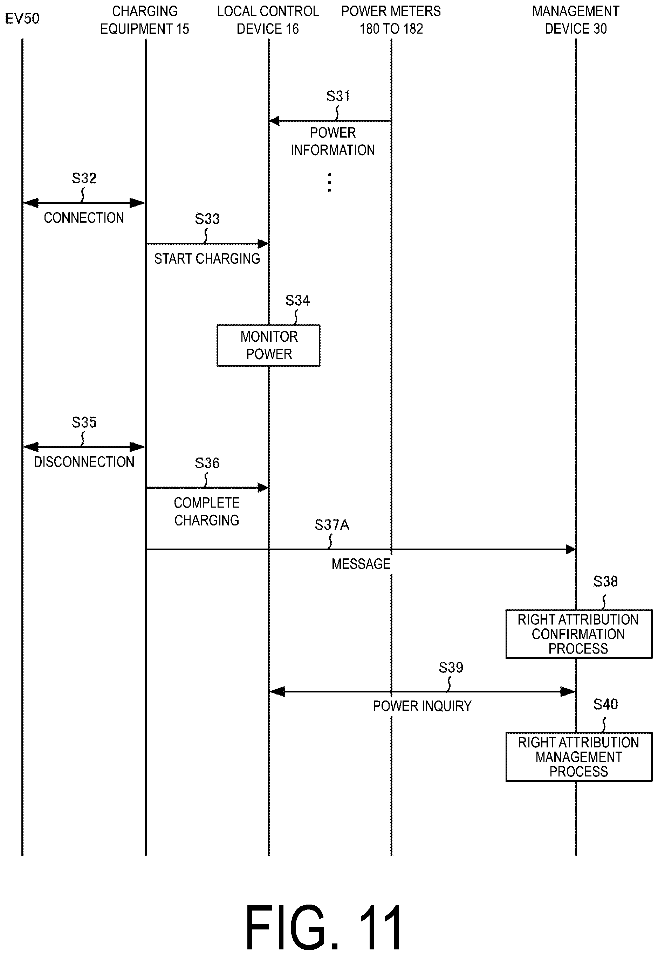

As illustrated in FIG. 11, in step S31, the local control device 16 receives power information from the power meter 180 to the power meter 182. The reception processing of the power information is repeated at a predetermined interval.

In step S32, the EV 50 is connected to the charging equipment 15. The EV 50 may notify the charging equipment 15 of the vehicle ID of the EV 50. The charging equipment 15 may notify the EV 50 of the charging equipment ID of the charging equipment 15.

In step S33, the charging equipment 15 notifies the local control device 16 that charging of the EV 50 has been started. The charging equipment 15 may notify the local control device 16 of the charging start time of the EV 50.

In step S34, the local control device 16 monitors the power of the home facility 10. The local control device 16 monitors at least the power measured by the power meter 180 to the power meter 182.

In step S35, the connection between the EV 50 and the charging equipment 15 is disconnected.

In step S36, the charging equipment 15 notifies the local control device 16 that charging of the EV 50 has been completed. The charging equipment 15 may notify the local control device 16 of the charging end time of the EV 50.

In step S37A, the charging equipment 15 transmits, to the management device 30, a message including at least the first information element and the second information element (see FIG. 5). In other words, the communicator 31 of the management device 30 receives, from the charging equipment 15, the message including at least the first information element and the second information element. As described above, the message may include the time information element. FIG. 11 illustrates a case in which the message does not include the power information element.

In step S38, the management device 30 confirms the attribution subject of the environmental value generated by the charging from the solar cell device 11 to the EV 50. Specifically, the management device 30 confirms whether the first information element and the second information element satisfy the correspondence relationship stored in the storage 32. Here, when a combination of the first information element and the second information element is stored in the storage 32, the management device 30 identifies the attribution subject according to the correspondence relationship stored in the storage 32. On the other hand, when the combination of the first information element and the second information element is not stored in the storage 32, the management device 30 determines that the attribution subject is unknown, and does not identify any attribution subject.

In step S39, the management device 30 inquires of the local control device 16 about the self-consumption power in the time zone in which the charging from the solar cell device 11 to the EV 50 is performed. The management device 30 may inquire of the local control device 16 about the charged power from the solar cell device 11 to the EV 50. The management device 30 receives, from the local control device 16, a message including the power information element (that is, the third information element) for identifying the self-consumption power of the predetermined facility. That is, the message including the third information element may be separate from the message including the first information element and the second information element.

In step S40, when the attribution subject is identified, the management device 30 manages the identified attribution subject. The management device 30 manages the self-consumption power in the time zone in which the charging from the solar cell device 11 to the EV 50 is performed, along with the identified attribution subject. The management device 30 may manage the charged power from the solar cell device 11 to the EV 50 as the self-consumption power.

Although the self-power consumption of the home facility 10 is described in FIG. 11, the power management method illustrated in FIG. 11 can also be applied to the self-consumption power of the visit facility 20A. That is, the attribution subject of the environmental value generated by the charging from the solar cell device 21A to the EV 50 performed in the visit facility 20A may be identified based on the combination of the first information element for identifying the right holder for the EV 50 and the second information element for identifying the right holder for the solar cell device 21A.

### Third Embodiment

A third embodiment of the embodiment will be described below. In the following, differences from the embodiment will be mainly described.

In the embodiment, the case is described in which the transmission subject of the message including the first information element and the second information element is the local control device 16 of the home facility 10. In contrast, in the third embodiment, a case will be described in which the transmission subject of the message is the EV 50.

### Power Management Method

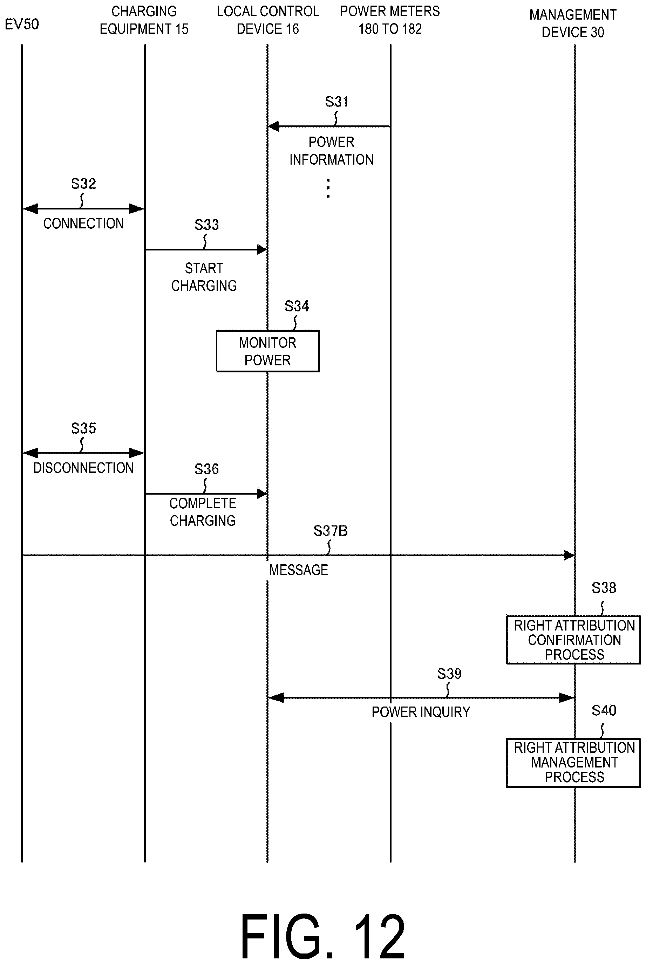

A power management method according to the third embodiment will be described below. Here, the self-consumption power of the home facility 10 will be described as an example. In FIG. 12, similar numeral signs are given to steps similar to the flow illustrated in FIG. 11. The description of the steps similar to the flow illustrated in FIG. 11 is omitted.

In step S37B, the EV 50 transmits, to the management device 30, a message including at least the first information element and the second information element (see FIG. 5). As described above, the message may include the time information element. FIG. 12 illustrates a case in which the message does not include the power information element.

### Forth Embodiment

A forth embodiment of the embodiment will be described below. In the following, differences from the embodiment will be mainly described.

In the embodiment, the case is illustrated in which the charged power from the power generator to the EV 50 is treated as a part of the self-consumption power. In contrast, in the forth embodiment, a case will be described in which the charged power from the power generator to the EV 50 is treated as being measurable.

### Home Facility

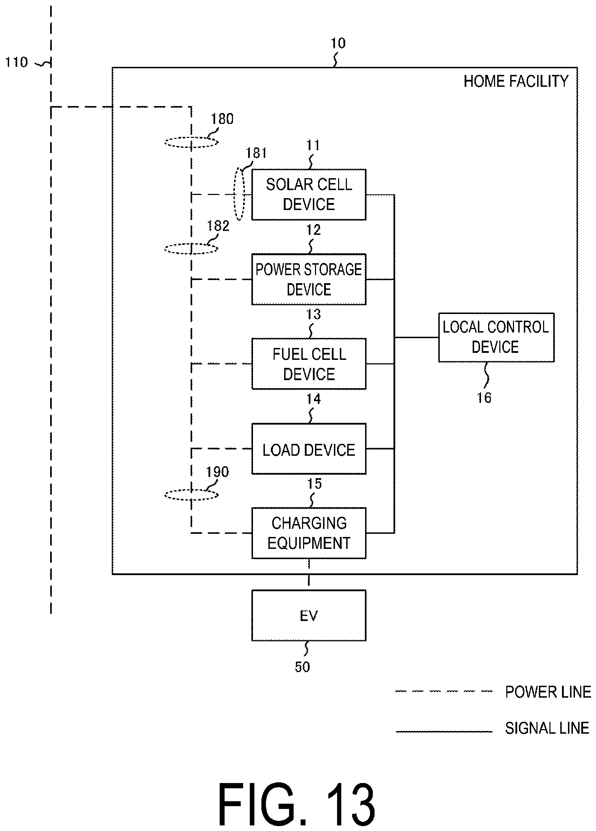

The home facility 10 according to the forth embodiment will be described below. In FIG. 13, similar numeral signs are given to configurations similar to those in FIG. 2. The description of the configurations similar to those in FIG. 2 is omitted.

As illustrated in FIG. 13, the home facility 10 includes a power meter 190. The power meter 190 is provided upstream of the charging equipment 15 to measure the charged power or discharged power of the EV 50. The power meter 190 may be provided downstream of a device (the load device 14, in FIG. 13) upstream of the charging equipment 15. The power meter 190 may be a power meter certified by the third party organization.

In such a configuration, the charged power measured by the power meter 190 may be considered as the charged power from the power generator to the EV 50 within a range that does not exceed the output power of the solar cell device 11 measured by the power meter 181. That is, the self-consumption power of the home facility 10 may be considered to be preferentially allocated to the EV 50 rather than a device (for example, the load device 14) other than the EV 50. In such a case, the self-consumption power allocated to the device (for example, the load device 14) other than the EV 50 may be considered to be calculated as a difference obtained by subtracting the charged power to the EV 50 from the self-consumption power of the home facility 10.

According to such a configuration, the charged power from the power generator to the EV 50 is measured by the power meter 190. Accordingly, it is easy to flexibly set the attribution subject of the environmental value generated by the charging from the power generator to the EV 50.

### Fifth Embodiment

A fifth embodiment of the embodiment will be described below. In the following, differences from the embodiment will be mainly described.

In the embodiment, when the combination of the first information element and the second information element is not stored in the storage 32, the management device 30 determines that the attribution subject is unknown, and does not identify any attribution subject. In fifth embodiment, a case where the attribution subject is not identified, in other words, a case where the charging from the power generator to the EV 50 is not recognized as the self-consumption will be described.

In the fifth embodiment, when the charging of the third party power storage device provided in the third party moving body not attributed to the predetermined facility is performed by the power generated by the power generator, the management device 30 does not identify any attribution subject of the environmental value if the charging with respect to the third party power storage device is not identified, and identifies the attribution subject of the environmental value if the charging with respect to the third party power storage device is identified. The case where the charging with respect to the third party power storage device is identified may include a case where the charged power with respect to the third party power storage device can be distinguished from another power consumption, a case where the attribution subject of the third party power storage device is obvious, or the like. The case where the charging with respect to the third party power storage device is not identified may include a case where the charged power with respect to the third party power storage device cannot be distinguished from another power consumption, a case where the attribution subject of the third party power storage device is not obvious, or the like.

For example, when the predetermined facility is the visit facility 20A, a case is assumed in which the charging from the solar cell device 21A to the EV 50 is performed. In such a case, the EV 50 is an example of a third party moving body not attributed to the visit facility 20A. Accordingly, the power storage device provided in the EV 50 is the example of the third party power storage device.

Under such assumptions, the management device 30 identifies the attribution subject of the environmental value if the charging from the solar cell device 21A to the EV 50 is identified, but does not identify any attribution subject of the environmental value if the charging from the solar cell device 21A to the EV 50 is not identified.

Similar to the embodiment, as the case where the attribution subject of the environmental value is not identified, a case can be considered in which a combination of the solar cell device 21A and the EV 50 cannot be identified by the correspondence relationship stored in the storage 32. Furthermore, the case where the attribution subject of the environmental value is not identified include a case where the first information element for identifying the EV 50 cannot be obtained, a case where the time zone in which the charging from the solar cell device 21A to the EV 50 is performed cannot be identified, and a case where the charged power from the solar cell device 21A to the EV 50 cannot be identified. In these cases, the charged power from the solar cell device 21A to the EV 50 may be treated as a part of the self-consumption power of the visit facility 20A.

On the other hand, in the case where the charging from the solar cell device 21A to the EV 50 is identified, the charged power from the solar cell device 21A to the EV 50 may be subtracted from the self-consumption power of the visit facility 20A. However, even in the case where the charging from the solar cell device 21A to the EV 50 is identified, when the power is supplied to the predetermined facility from the power grid 110, the environmental value need not be calculated for the self-consumption power of the predetermined facility, and the attribution subject of the environmental value need not be identified in the time at which the charging to the EV 50 is performed.

### Sixth Embodiment

A sixth embodiment of the embodiment will be described below. In the following, differences from the embodiment will be mainly described.

In the sixth embodiment, a case will be described in which creation of the message including at least the first information element and the second information element. In the following, the visit facility 20A will be described as an example as the predetermined facility.

The local control device 26A provided in the predetermined facility may create the message. The charging equipment 25A may create the message as in the second embodiment described above, or the EV 50 may create the message as in the third embodiment described above. The visit facility 20A that obtains the first information element from the EV 50 may create the message. The EV 50 that obtains the second information element from the visit facility 20A may create the message.

The message may be created when the charging of the EV 50 has been completed. When the EV 50 has been connected to the charging equipment 25A, when the charging of the EV 50 has been started, when the connection between the EV 50 and the charging equipment 25A has been disconnected, or the like, the message may be created.

The connection between the EV 50 and the charging equipment 25A may be achieved by connecting a charging plug provided in the EV 50 to an outlet of the charging equipment 25A. By connection between the charging plug provided in the EV 50 and the outlet of the charging equipment 25A, a power line is formed between the EV 50 and the charging equipment 25A. By connection between the charging plug included in the EV 50 and the outlet of the charging equipment 25A, a signal line is formed between the EV 50 and the charging equipment 25A.

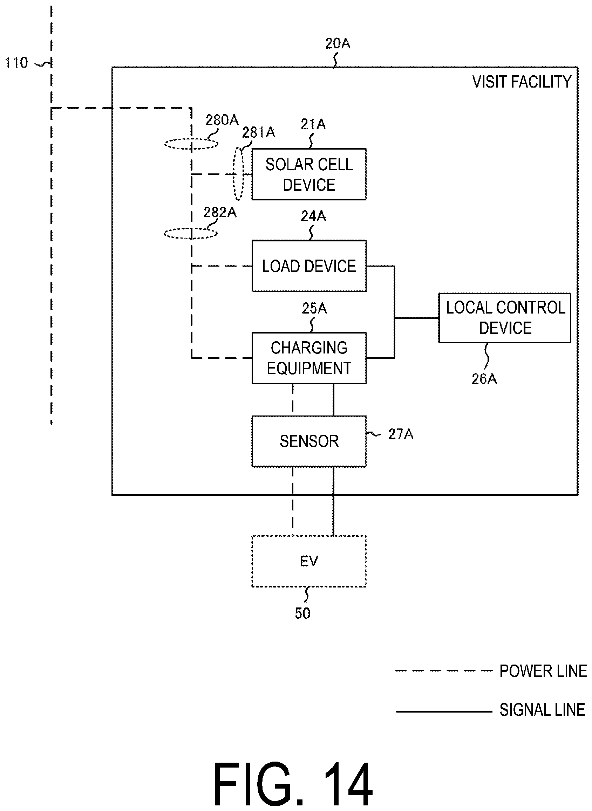

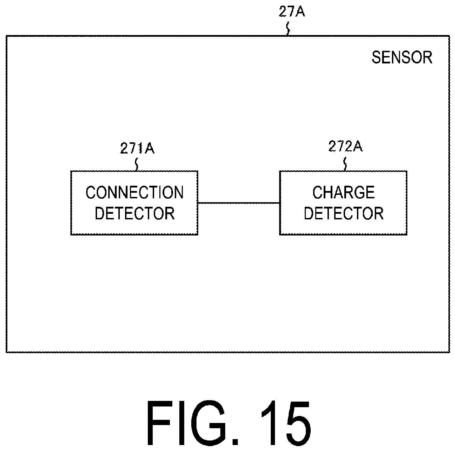

As illustrated in FIG. 14, a detector 27A is provided on the power line and the signal line formed by the connection between the EV 50 and the charging equipment 25A. As illustrated in FIG. 15, the detector 27A includes a connection detector 271A and a charge detector 272A. The detector may be provided in the visit facility 25A or may be provided in the EV 50. The detector 27A detects the connection between the EV 50 and the charging equipment 25A or the charging of the EV 50.

The connection between the EV 50 and the charging equipment 25A is detected by the connection detector 271A provided in the detector 27A. The connection detector 271A may be provided in either the EV 50 or the charging equipment 25A. The connection detector 271A may be provided on the power line, or may be provided on the signal line. The connection detector 271A may be a current sensor provided in the charging plug or the outlet. In this case, the connection detector 271A may determine that the EV 50 and the charging equipment 25A are connected to each other by electricity flowing in the charging plug or the outlet. The connection detector 271A may be a switch provided in the charging plug or the outlet. In this case, the connection detector 271A may determine that the EV 50 and the charging equipment 25A are connected to each other by being pressed. The connection detector 271A is not limited thereto, and it is sufficient as long as it can detect that the charging plug and the outlet come into contact with each other to be in a state in which the electricity can be transmitted and received. Furthermore, the connection detector 271A may determine that the EV 50 and the charging equipment 25A are connected to each other by the fact that the power line or the signal line is formed between the EV 50 and the charging equipment 25A.

When the connection detector 271A determines that the connection is performed, the connection detector 271A may transmit, to any one of the charging equipment 25A, the local control device 26A, the EV 50, and the management device 30 (communicator 31), information indicating that the connection is performed. The information indicating that the connection is performed may include information indicating the visit facility 20A and information indicating the EV 50. The charging equipment 25A, the local control device 26A, the EV 50, and the management device 30 (communicator 31) that have received the information from the connection detector 271A determine that the EV 50 and the charging equipment 25A have been connected to each other. After the EV 50 has been connected to the charging equipment 25A, a case where the charging of the EV 50 has been started, a case where the connection between the EV 50 and the charging equipment 25A has been disconnected, or a case where the charging of the EV 50 has been completed, the connection detector 271A may transmit, to the charging equipment 25A, the local control device 26A, the EV 50, and the management device 30 (communicator 31), the information indicating that the connection is performed. Furthermore, when the connection between the EV 50 and the charging equipment 25A has been disconnected, the connection detector 271A may transmit, to the charging equipment 25A, the local control device 26A, the EV 50, and the management device 30 (communicator 31), the information indicating that the connection has been disconnected.

The charging of the EV 50 is detected by the charge detector 272A provided in the detector 27A. The charge detector 272A may be provided in either the EV 50 or the charging equipment 25A. The charge detector 272A may be provided on the power line. The charge detector 272A may be a current sensor provided in the charging plug or the outlet. The charge detector 272A may detect the charging from the power generator provided in the visit facility 20A to the EV 50.

In this case, the charge detector 272A may determine that the charging of the EV 50 is performed by the electricity flowing in the charging plug or the outlet. The charge detector 272A may determine that the charging of the EV 50 has been started by the electricity being started to flow in the charging plug or the outlet. The charge detector 272A may determine that the charging of the EV 50 has been completed by the electricity not flowing in the charging plug or the outlet. The charge detector 272A may determine that the charging of the EV 50 has been completed when a current amount flowing within a certain period of time is equal to a predetermined threshold value or less.

When the charge detector 272A determines that the charging has been started, the charge detector 272A may transmit, to any one of the charging equipment 25A, the local control device 26A, the EV 50, and the management device 30 (communicator 31), information indicating that the charging has been started. The information indicating that the charging has been started may include the information indicating the visit facility 20A and the information indicating the EV 50. The charging equipment 25A, the local control device 26A, the EV 50, and the management device 30 (communicator 31) that have received the information from the charge detector 272A determine that the charging of the EV 50 and the charging equipment 25A has been started.

When the charge detector 272A determines that the charging has been completed, the charge detector 272A may transmit, to any one of the charging equipment 25A, the local control device 26A, the EV 50, and the management device 30 (communicator 31), information indicating that the charging has been completed. The information indicating that the charging has been completed may include the information indicating the visit facility 20A and the information indicating the EV 50. The charging equipment 25A, the local control device 26A, the EV 50, and the management device 30 (communicator 31) that have received the information from the charge detector 272A determine that the charging of the EV 50 and the charging equipment 25A has been completed.

When the charge detector 272A determines that the charging has been completed, the charge detector 272A may transmit, to any one of the charging equipment 25A, the local control device 26A, the EV 50, and the management device 30 (communicator 31), information for identifying the charged power from the power generator to the EV 50. The information for identifying the charged power may be a power information element that is an information element for identifying the self-consumption power in the time zone in which the charging from the power generator described later to the EV 50 is performed. Furthermore, it may also be a charged amount charged from the power generator to the EV 50.

Next, for example, a case will be considered in which the local control device 26A creates a message. In this case, the receiver (communicator 31) provided in the management device 30 receives the message from the predetermined facility.

The local control device 26A obtains the first information element of the EV 50 from the EV 50. The local control device 26A may obtain the first information element of the EV 50 via the signal line between the EV 50 and the charging equipment 25A. The local control device 26A may obtain the first information element of the EV 50 via the connection between the charging plug and the outlet. The local control device 26A may obtain the first information element of the EV 50 when the charging of the EV 50 has been completed. When the EV 50 has been connected to the charging equipment 25A, or when the charging of the EV 50 has been started, the local control device 26A may obtain the first information element of the EV 50.

The local control device 26A may create the message based on the information obtained from the EV 50. The local control device 26A may create the message by combining the first information element obtained from the EV 50 and the second information element managed by the charging equipment 25A or the local control device 26A. The local control device 26A may transmit the message to the receiver (communicator 31) provided in the management device 30 when the charging of the EV 50 has been completed.

The message may be created when the charging of the EV 50 has been completed. In this case, the local control device 26A may obtain the information for identifying the charged power from the power generator to the EV 50. The local control device 26A may transmit, to the receiver (communicator 31) provided in the management device 30, the message including the information for identifying the charged power from the power generator to the EV 50. By including the information for identifying the charged power from the power generator to the EV 50 in the message, the local control device 26A can identify the attribution subject and at the same time grasp a transaction volume of the environmental value.

The local control device 26A may obtain the information for identifying the charged power from information managed by itself by directly or indirectly performing calculation. Furthermore, the local control device 26A may obtain the information for identifying the charged power from at least one of the solar cell device 21A, the power meter 280A, the power meter 281A, the power meter 282A, and the charge detector 272A. The local control device 26A may obtain the information for identifying the charged power by performing calculation based on the information obtained from the them.

The message may be created when the EV 50 has been connected to the charging equipment 25A, or when the charging of the EV 50 has been started. In this case, the local control device 26A may include the time information element that is the information element for identifying the time zone in which the charging to the EV 50 is performed, in the message. In this case, the local control device 26A may transmit, to the receiver (communicator 31) provided in the management device 30, the message without including the information for identifying the charged power.

In this case, when the charging of the EV 50 has been completed, the local control device 26A may transmit, to the receiver (communicator 31) provided in the management device 30, the message including the information for identifying the charged power from the power generator to the EV 50. At this time, the local control device 26A may include the time information element in the message including the information for identifying the charged power from the power generator to the EV 50. By including the time information element in both a previously transmitted message and a subsequently transmitted message including the information for identifying the charged power, the controller can identify the attribution subject even when the messages are separately transmitted.

As described above, since the local control device 26A can obtain the first information element of the EV 50 connected to the charging equipment 25A via the connection between the charging equipment 25A and the EV 50, even when a location of the EV 50 changes according to the movement of the EV 50, the local control device 26A can create the message used to identify the attribution subject.

Even when the charging equipment 25A creates the message, similar to the example of the local control device 26A described above, the charging equipment 25A may obtain the first information element of the EV 50 via the connection between the charging equipment 25A and the EV 50. In this case, the charging equipment 25A may create the message by combining the first information element obtained from the EV 50 and the second information element managed by the charging equipment 25A or the local control device 26A.

Even when the EV 50 creates the message, similar to the example of the local control device 26A described above, the EV 50 may obtain the second information element managed by the second information element managed by the charging equipment 25A or the local control device 26A from the charging equipment 25A or the local control device 26A via the connection between the charging equipment 25A and the EV 50. The EV 50 may create the message by combining the second information element obtained from the charging equipment 25A or the local control device 26A and the first information element managed by the EV 50.

As described above, when the visit facility 20A and the EV 50 are connected to each other, the visit facility 20A or the EV 50 can obtain the first information element or the second information element managed by a connection partner via the connection between the charging equipment 25A and the EV 50, thus creating the message used to identify the attribution subject even when the location of the EV 50 changes according to the movement.

The example of the visit facility 20A described above may be similarly applied even when the predetermined facility (the home facility 10 or the visit facility 20) and the EV 50 are connected to each other. The predetermined facility (the home facility 10 or the visit facility 20) may also include the configurations similar to those of the detector 27A, the connection detector 271A, and the charge detector 272A included in the visit facility 20A.

### Other Embodiments

Although the present invention is described by the above-described embodiment, it should not be understood that the description and the drawings, which form a part of this disclosure, limit this invention. Various alternative embodiments, examples, and operational techniques will be apparent from this disclosure to those skilled in the art.

In the embodiment, the case is illustrated in which the moving body is the EV 50. However, the embodiment is not limited to this example. The moving body is assumed to move from the home facility 10 to the visit facility 20, and may be an object including the power storage device. A capacity of the power storage device is arbitrary.

In the embodiment, the case is illustrated in which the power generator that generates environmental value by the self-consumption is the solar cell device (the solar cell device 11 or the solar cell device 21A). However, the embodiment is not limited to this example. The power generator that generates environmental value by the self-consumption may be the power generator that outputs power by the renewable energy. For example, the power generator that generates environmental value by the self-consumption may include one or more power generators, selected from the wind power generator, the water power generator, the geothermal power generator, and the biomass power generator.

Although not specifically mentioned in the embodiments, the power storage device provided in the predetermined facility may be treated as the power generator that generates the environmental value by the self-consumption. In such a case, a type of the power (for example, the power grid, the solar cell device, the fuel cell device, and the like) used for charging the power storage device may be identifiable.

Although not specifically mentioned in the embodiments, the fuel cell device may be treated as the power generator that generates the environmental value by the self-consumption. In such a case, the environmental value generated by the self-consumption of the output power of the fuel cell device may be managed with being identifiable from the environmental value generated by the self-consumption of the output power of the solar cell device.

In the embodiment, the case is illustrated in which the reverse power flow is not allowed for the discharged power of the power storage device. However, the embodiment is not limited to this example. The reverse power flow may be allowed for the discharged power of the power storage device.

In the embodiment, the case is illustrated in which the reverse power flow is not allowed for the discharged power of the fuel cell device. However, the embodiment is not limited to this example. The reverse power flow may be allowed for the discharged power of the fuel cell device.

Although not specifically mentioned in the embodiments, the charging equipment 15, the local control device 16, the charging equipment 25A, and the local control device 26A and the management device 30 may be time-synchronized by a time server. The time server may be a Network Time Protocol (NTP) server, or may be a Global Positioning System (GPS) server (satellite).

Although the terms are not mentioned in the embodiments, the self-consumption power of the home facility 10 may be corrected by a transmission loss occurring in the power line between the power generator and the EV 50. For example, the power transmission loss may be identified by a length of the power line between the power generator and the EV 50.

In an embodiment, the case is illustrated in which the local control device is provided in the predetermined facility. However, the embodiment is not limited to this example. The local control device may be provided by the cloud service.

Although not specifically mentioned in the embodiment, the electric power may be an instantaneous value (kW) or an integrated value per unit time (kWh).

Note that the contents of JP No. 2019-238536 (filed on December 27, 2019) are incorporated herein by reference in its entirety.

## Claims

1. A power management system for managing predetermined facilities comprising a power generator, the power management system comprising:
a receiver configured to receive a message when charging of a power storage device in a moving body is performed by power generated by the power generator, the message comprising;
a first information element for identifying a right holder regarding the moving body that comprises the power storage device; and
a second information element for identifying a right holder regarding the power generator; and
a controller configured to identify an attribution subject of an environmental value generated by the charging of the power storage device based on the first information element and the second information element.

2. The power management system according to claim 1, wherein
at least one of the predetermined facility configured to obtain the first information element from the moving body or the moving body configured to obtain the second information element from the predetermined facility creates the message.

3. The power management system according to claim 1 or 2, wherein
the first information element comprises an information element for identifying the moving body.

4. The power management system according to any one of claims 1 to 3, wherein
the second information element comprises an information element for identifying a charging equipment that is configured to execute charging of the power storage device.

5. The power management system according to claim 4, wherein
the receiver is configured to receive the message from the charging equipment.

6. The power management system according to claim 4 or 5, further comprising:
a storage configured to store a correspondence relationship between the charging equipment and the moving body as a correspondence relationship for identifying the attribution subject of the environmental value, wherein
the controller is configured to identify the attribution subject of the environmental value based on whether the first information element and the second information element satisfy the correspondence relationship.

7. The power management system according to any one of claims 1 to 6, further comprising:
a storage configured to store a correspondence relationship between at least one of the predetermined facility or the power generator and the moving body as a correspondence relationship for identifying the attribution subject of the environmental value, wherein
the controller is configured to identify the attribution subject of the environmental value based on whether the first information element and the second information element satisfy the correspondence relationship.

8. The power management system according to any one of claims 1 to 6, wherein
the message comprises a third information element for identifying self-consumption power of the predetermined facility.

9. The power management system according to any one of claims 1 to 8, wherein
when charging of a third party power storage device in a third party moving body not attributed to the predetermined facility is performed by power generated by the power generator,
the controller does not identify any attribution subject of the environmental value if the charging with respect to the third party power storage device is not identified, and
the controller identifies the attribution subject of the environmental value if the charging with respect to the third party power storage device is identified.

10. A power management method for managing a predetermined facilities comprising a power generator, the power management method comprising:
receiving a message when charging of a power storage device in a moving body is performed by power generated by the power generator, the message comprising;
a first information element for identifying a right holder regarding the moving body that comprises the power storage device; and
a second information element for identifying a right holder regarding the power generator; and
identifying an attribution subject of an environmental value generated by the charging of the power storage device based on the first information element and the second information element.
